# EUROPÄISCHE PATENTSCHRIFT

(11) **EP 3 554 810 B1**
(45) Veröffentlichungstag und Bekanntmachung des Hinweises auf die Patenterteilung: **20.01.2021**
(21) Anmeldenummer: 17825739.0
(22) Anmeldetag: 13.12.2017
(51) Int. Cl.: B29C 73/10, B29C 73/04, B29C 37/00, B29C 35/02

(54) **VERFAHREN ZUR REPARATUR VON FORMTEILEN UNTER EINSATZ EINES SCHICHTFÖRMIGEN REPARATURMATERIALS**
METHOD FOR REPAIRING MOULDED PARTS USING A REPAIR MATERIAL IN THE FORM OF A LAYER
PROCÉDÉ DE RÉPARATION DE PIÈCES MOULÉES AU MOYEN D'UN MATÉRIAU DE RÉPARATION STRATIFIÉ

(30) Priorität: 15.12.2016 DE 102016124458
(43) Veröffentlichungstag der Anmeldung: 23.10.2019
(73) Patentinhaber: Structrepair GmbH, 01945 Ruhland (DE)
(72) Erfinder: BECKER, Michael, 01326 Dresden (DE); RENNER, Ole, 01099 Dresden (DE); SCHEFFEL, Christoph, 01097 Dresden (DE); MÜLLER, Holger, 01855 Sebnitz (DE); CZULAK, Andrzej, 32-087 Zielonki (PL)
(74) Vertreter: Sperling, Thomas
(86) Internationale Anmeldenummer: PCT/DE2017/101068
(87) Internationale Veröffentlichungsnummer: WO 2018/108210

(56) Entgegenhaltungen:
- EP-A2- 1 755 871
- WO-A1-2016/137565
- US-A1- 2007 264 456
- US-A1- 2016 159 057

## Beschreibung

Die Erfindung betrifft ein Verfahren zur Reparatur von Formteilen, insbesondere von Formteilen aus Faserverbundkunststoffen.

Als Formteile im Sinne der Erfindung werden zwei oder dreidimensionale Bauteile angesehen, welche in verschiedensten Anwendungsgebieten und Branchen, wie Windkraft-, Automobil-, Tank- und Rohrleitungsbau, Sport- und Freizeitindustrie sowie dem Bauwesen zum Einsatz kommen. Die Formteile sind dabei überwiegend aus Faserverbundkunststoffen gefertigt, jedoch sind auch allgemein Bauteile aus anderen Materialien, wie Holz, Metall, Beton, inbegriffen, deren Oberfläche mit dem Faserverbundkunststoffmaterial des Reparaturmaterials über beispielsweise Klebe- oder Schweißverbindungen verbindbar sind.

Im Sinne der Ressourcenschonung und der Einsparung von Kosten werden Reparaturprozesse für Formteile alternativ zum Komplettaustausch der betroffenen Bauteile oder Komponenten branchenübergreifend eingesetzt. Gerade bei strukturellen Schäden an Formteilen, welche Einfluss auf die mechanische Festigkeit der Bauteile haben oder bei Schäden, bei denen die beschädigte Struktur nachmodelliert werden muss, eignet sich der Einsatz von Faserverbundwerkstoffen als Reparaturmaterialien aufgrund deren einfacher Verarbeitungseigenschaften als auch der sehr guten mechanischen Eigenschaften dieser Kompositwerkstoffe.

Das Anwendungsgebiet der Erfindung liegt somit im weiteren Sinne in verschiedensten Bereichen, in denen aufwändige Reparaturen von Formteilen bei zum Teil komplexen Geometrien der Formteile als Alternative zum partiellen oder Komplettaustausch dieser Komponenten Anwendung finden.

Beispielsweise stellt die Reparatur von Oberflächen dreidimensionaler Formteile mit Kanten und Ecken hohe Ansprüche, die mit dem erfindungsgemäßen Verfahren unter Einsatz eines schichtförmigen Reparaturmaterials aus Faserverbundkunststoff realisiert werden können. Beispielsweise werden in der Windenergiebranche Faserverbundreparaturen an Rotorblättern bereits in hohem Umfang durchgeführt. Die Rotorblätter von Windkraftanlagen sind permanent extremen mechanischen und chemischen Wechselbeanspruchungen ausgesetzt, was umfangreiche Wartungs- und Instandhaltungsmaßnahmen notwendig macht. Die Schadensbehebung wird in den meisten Fällen durch manuelles Handlaminieren der zu reparierenden Bereiche realisiert. Dies ist mit einem sehr hohen Aufwand an Personal und Zeit verbunden und damit sehr kostenintensiv.

Im Stand der Technik sind für die Reparatur von Faserverbundkunststoffen diverse Verfahren und Reparaturmaterialien bekannt und kommerziell verfügbar, bei denen ein UV-aushärtendes Prepregsystem als Reparaturmaterial mit einem Faservolumengehalt von 35 % angewendet wird. Auf der Basis der UV-Härtung kann das Reparaturmaterial in relativ kurzer Zeit ausgehärtet werden.
Nachteilig an diesem System ist, dass die UV-Aushärtung des Reparaturmaterials mit der Verwendung von speziellen UV-Strahlungsquellen einhergeht, um eine Aushärtung in vertretbaren Zeiten zu erreichen. Daraus entsteht ein zusätzlicher apparativer Aufwand und die Notwendigkeit, die UV-Strahlung entsprechend an den bearbeiteten Geometrien gleichmäßig und in ausreichender Intensität zu applizieren. Zudem besteht eine Empfindlichkeit der Methode gegenüber äußeren Einflüssen, insbesondere der Sonnenstrahlung.

Da bei Rotorblättern von Windkraftanlagen Schäden häufig im Bereich der Vorder- und Hinterkante auftreten und in diesen Bereichen Reparaturprozesse durch die geringen Biegeradien der Kanten deutlich hinsichtlich der Erreichbarkeit und für die gleichmäßige Aushärtung erschwert sind, sind bislang überwiegend unzureichende Ergebnisse erzielt worden.

Im Sport- und Freizeitbereich werden Reparaturen für faserverstärkte Kunststoffe seit Jahrzehnten eingesetzt. Als großes Anwendungsgebiet ist der Wassersport mit Boots-, Segel-, Surf- und Modellsport zu nennen. Die dabei eingesetzten Reparaturmaterialien und Methoden erfordern zumeist keine zusätzlichen apparativen Aufwendungen, wie die UV-aushärtenden Systeme, sind jedoch mit den erzielbaren Ergebnissen auch auf den Hobbybereich beschränkt.

Weiterhin sind Reparatursysteme mit einem wasseraktivierbaren Glasfaser-Epoxidharz-Verbund bekannt, die beispielsweise im Segelsportequipment oder bei Hobby-Notreparaturen von zum Beispiel Gartengeräten, Zeltstangen, Sanitärrohren und Ähnlichem einsetzbar sind. Die Reparaturen erfolgen nach dem Klebebandprinzip ohne Werkzeuge, jedoch ist der Einsatz des Reparaturbandes beschränkt auf umwickelbare Bereiche und Geometrien, wie Rohre oder Stäbe.

Bei in der Luftfahrt eingesetzten Reparaturverfahren und Materialien sind höchste Steifigkeits- und Festigkeitsanforderungen einzuhalten. Zur strukturellen Reparatur kommen daher fast ausschließlich heißaushärtende, duroplastische Prepregsysteme zum Einsatz, die aufwendig vorbereitet werden und deren Aushärtung über sogenannte Hot bond units (Klebecomputer) gesteuert wird. Zur Heißhärtung von Prepregs in dreidimensional geformten Bereichen kommen in erster Linie flexible Silikonmatten zum Einsatz. Bei komplizierter geformten Bereichen, wie sie auch mit dem erfindungsgemäßen Verfahren repariert werden können, werden Heißluftsäcke in den zu reparierenden Bereichen eingesetzt.

Im Baubereich besteht aufgrund von Korrosion bei Stahlbeton vor allem zukünftig ein hoher Bedarf an Instandsetzungs-/Reparaturmaßnahmen. Bei der Instandsetzung von Stahlbetonkonstruktionen wird neben dünnen Faserbetonstrukturen auch auf den Einsatz von Faserverbundkunststoffen gesetzt. Dabei werden geklebte und vorinfiltrierte Carbonfaserkunststoff-Lamellen oder Carbonfaserkunststoff-Sheets eingesetzt, die im Handlaminierverfahren an die zu verstärkende Konstruktion angeklebt werden.

Reparaturmaterialien aus Faserverbundkunststoffen werden im Tank- und Rohrleitungsbau bei Faserverbundsubstraten und auch für die Reparatur von Stahl eingesetzt. So werden Reparaturen mit Faserverbundkunststoffbandagen zur Reparatur von Pipelines und Rohren eingesetzt.
Vorteil dieses Verfahrens ist, dass es im Vergleich zu Schweißverfahren oder der kompletten Leitungserneuerung ohne Stilllegung der Leitung durchgeführt werden kann. In erster Linie dominieren Nasslaminierverfahren, wie bereits angegeben. Weiterhin ist ein Verfahren bekannt, bei dem dünne, vorkonsolidierte Faserverbundkunststoff-Lamellen mit Hilfe eines ZweiKomponenten-Epoxid-Harz-Klebers auf die Reparaturstelle aufgebracht werden. Im Bereich gerader Rohrstücke ist dieses System sehr zuverlässig. In gewinkelten Bereichen oder bei T-Stücken ist die Reparatur mittels dieses Verfahrens nicht oder nur stark eingeschränkt möglich, da dieses Verfahren einen umwickelbaren Reparaturbereich benötigt.

Aus der WO 2016/137565 A1 ist ein Verfahren zum Reparieren einer Verbundstruktur oder zum Bilden einer Komponente eines Teils bekannt. Das Verfahren beinhaltet das lösbare Verlegen eines ersten Elements, das bei einer ersten Temperatur bei oder über einer eingeschränkten Temperaturgrenze der Verbundstruktur oder des Verbundteils härtbar ist und das lösbare Verlegen eines zweiten Elements auf dem ersten Element, das bei einer zweiten Temperatur unterhalb der eingeschränkten Temperaturgrenze härtbar ist. Weiterhin beinhaltet das Verfahren das Aushärten des zweiten Elements zu einem Gerüst bei der zweiten Temperatur an der Verbundstruktur oder dem Verbundteil sowie das Übertragen des ersten Elements und des Gerüsts von der Verbundstruktur oder dem Verbundteil zum Aushärten des ersten Elements. Das Entfernen des ausgehärteten ersten Elements von dem Gerüst zum Verbinden des ausgehärteten ersten Elements mit der Verbundstruktur oder dem Verbundteil schließen das Verfahren ab.

Aus der WO 2006/046974 A2 ist weiterhin ein Verfahren zur Verwendung von Verbundfüllstücken aus Formgedächtnispolymeren bekannt.

Die US 2007/264456 A1 offenbart Patches aus transparentem oder transluzentem Formgedächtnismaterial zur Reparatur beschädigter transparenter oder transluzenter Teile. Diese Flicken können verwendet werden, um Risse und Löcher abzudecken oder zusätzliche strukturelle Unterstützung für die beschädigten Teile zu bieten. Je nach gewünschter Anwendung können die Patches in Größe und Eigenschaften stark variieren.

In der US 2016/159057 A1 wird ein Verfahren zur Formgebung von gestuften duroplastischen Verbundwerkstoffen offenbart.

Mit den aus dem Stand der Technik bekannten Reparaturverfahren lassen sich zuverlässige Reparaturen ausschließlich an ebenen, einfach oder schwach gekrümmten Reparaturflächen durchführen. Keines der bestehenden Reparaturverfahren eignet sich zur Reparatur von großflächigeren Schäden an stark gekrümmten Flächen, wie Ecken oder Kanten.
Da aber Ecken und Kanten aufgrund ihrer naturgemäß exponierten Position gehäuft Gegenstand von Reparaturen bei Formteilen sind, besteht ein Bedürfnis der Fachwelt ein Verfahren für diese bislang nur schwierig zu reparierenden Bereiche zur Verfügung zu stellen.
Weiterhin ist nachteilig anzuführen, dass keines der bekannten Verfahren eine ausreichende Kombination aus Schnelligkeit und Einfachheit des Prozesses sowie technischer Hochwertigkeit und Zuverlässigkeit bietet.
Zwar existieren Reparatursysteme für die Luftfahrtindustrie mit denen hochwertige Reparaturen durchgeführt werden können, jedoch beträgt die Aushärtedauer bei diesen Systemen in der Regel mehrere Stunden.
Bei Verfahren mit UV-Aushärtung kann zwar ein schnelles Verarbeiten gewährleistet werden, jedoch sind die zu erreichenden Reparaturqualitäten in der Regel zu gering, um auch in Industriebereichen Anwendung zu finden.

Die zu reparierenden Bauteile sind insbesondere im Bereich der Windenergieanlagen oder der Bauindustrie in der Regel sehr groß, schwer transportabel und den Witterungsbedingungen ausgesetzt. Dementsprechend ist auch der Reparaturprozess von den Umgebungsbedingungen abhängig. Gerade bei niedrigen Temperaturen ist die Verarbeitung von Harzsystemen, wie sie in den zuvor beschriebenen Verfahren verwendet werden, nicht möglich oder mit sehr langen Aushärtezeiten verbunden. Auch die Luftfeuchtigkeit ist ein Parameter, der die Ergebnisse der bekannten Reparaturverfahren negativ beeinflussen kann.

Die Aufgabe der Erfindung besteht somit darin, ein Verfahren für die Reparatur von Formteilen zur Verfügung zu stellen, welches eine vereinfachte Anpassung des Reparaturmaterials an komplizierte gekrümmte und dreidimensionale Schadstellen ermöglicht sowie eine schnelle und einfache Aushärtung mit einfachen Mitteln erreichbar ist.
Insgesamt soll der bisher erforderliche aufwändige Reparaturprozess industrieller Reparaturverfahren vereinfacht und auf bisher nicht reparierbare Bereiche mit starker Mehrfachkrümmung der zu reparierenden Konturen und Oberflächen erweitert werden.
Eine weitere Aufgabe der Erfindung besteht darin, Reparaturen auch unter ungünstigen Umgebungsbedingungen, wie großer Kälte und hoher Luftfeuchtigkeit, ausführen zu können.

Die Aufgabe wird durch ein Verfahren mit den Merkmalen gemäß Patentanspruch 1 gelöst. Weiterbildungen sind in den abhängigen Patentansprüchen angegeben.

Die Aufgabe der Erfindung wird insbesondere durch ein Verfahren zur Reparatur von Formteilen unter Einsatz eines schichtförmigen Reparaturmaterials gelöst, welches spezielle Eigenschaften aufweist. Das schichtförmige Reparaturmaterial besteht aus einem Faserverbundkunststoff, welcher bei einer Lagertemperatur, im Bereich der Umgebungstemperatur, fest ist und der jedoch bei Erwärmung bis zu einer Verformungstemperatur reversibel plastisch verformbar wird. Unter reversibel plastischer Verformbarkeit wird verstanden, dass das Reparaturmaterial bei Erreichen der Verformungstemperatur sich verformen und damit beispielsweise an die Oberfläche eines Formteils anpassen lässt, wobei bei sinkender Temperatur die Verformbarkeit wieder abnimmt und das Reparaturmaterial fest wird und in der im plastisch verformbaren Zustand angenommenen Form verbleibt.
Weiterhin ist das Reparaturmaterial dahingehend charakterisiert, dass es bei einer Aushärtetemperatur irreversibel formstabil aushärtbar ist. Dies bedeutet, dass das Reparaturmaterial bei einer erneuten Erwärmung bis zu einer Aushärtetemperatur die bei der Verformungstemperatur eingenommene Form behält und anschließend auch nicht bei erneutem Erwärmen sich in der Form verändert. Somit bezieht sich reversibel plastisch verformbar darauf, dass das verformbare Reparaturmaterial bei niedrigeren Temperaturen wieder fest wird und die Eigenschaft irreversibel formstabil aushärtbar bezieht sich darauf, dass das Reparaturmaterial nach dem Aushärten nicht wieder verformbar ist und dann einen duroplastischen Charakter hat.

Das Verfahren zur Reparatur der Formteile weist die folgenden Verfahrensschritte auf:
a) Erwärmen des Reparaturmaterials von der Lagertemperatur auf die Verformungstemperatur,
b) Aufbringen des plastisch verformbaren Reparaturmaterials auf einen Reparaturbereich des Formteils,
c) Abformen der Oberflächenkontur des Reparaturbereiches des Formteils,
d) Aktives oder passives Kühlen des Reparaturmaterials unter die Verformungstemperatur,
e) Entfernen des an die Kontur des Reparaturbereiches angeformten festen Reparaturmaterials vom Reparaturbereich des Formteils,
f) Erwärmen des Reparaturmaterials auf die Aushärtetemperatur unter formstabiler Aushärtung des Reparaturmaterials und
g) Verkleben des ausgehärteten Reparaturmaterials mit dem Reparaturbereich des Formteils.

Nach einer bevorzugten Ausgestaltung der Erfindung wird das Erwärmen und das Aufbringen des Reparaturmaterials sowie das Abformen des Reparaturmaterials in einem Verfahrensschritt ausgeführt. Dies erfolgt dadurch, dass das Reparaturmaterial unmittelbar auf der zu reparierenden Stelle des Formteils aufgelegt und mit Mitteln zur Erwärmung des Reparaturmaterials erwärmt wird, woraufhin sich das Reparaturmaterial an die Oberfläche des Formteils anlegt und dieses somit abformt.

Nach einer weiteren vorteilhaften Ausgestaltung der Erfindung werden mehrere Reparaturmaterialien übereinander auf dem Reparaturbereich aufgebracht und miteinander verbunden. Somit sind in Abhängigkeit der erforderlichen Schichtdicke, die für die erforderliche Reparatur notwendig ist, durch das Verbinden der einzelnen Schichten von Reparaturmaterialien untereinander auch stärkere Verbundreparaturschichten erzeugbar.

Das Erwärmen des Reparaturmaterials von der Lagertemperatur auf die Verformungstemperatur erfolgt mittels eines Heizelements unter Einbringen von Wärme in das Reparaturmaterial. Als Heizelement wird beispielsweise eine Heißluftpistole, ein Bügeleisen, eine Heizmatte, eine Heizfolie, ein heißluftgefüllter Behälter, ein Infrarotheizelement, ein Induktionsheizer oder ein Wärmekissen als Latentwärmespeicher eingesetzt. Auch Kombinationen der vorgenannten Heizelemente sind zur Erwärmung des Reparaturmaterials von der Lagertemperatur auf die Verformungstemperatur einsetzbar.

Die Verformungstemperatur für das Reparaturmaterial beträgt bevorzugt 80 Grad Celsius. Die Verformungstemperatur des Reparaturmaterials ist abhängig von den Materialeigenschaften des Reparaturmaterials und kann selbstverständlich entsprechend des eingesetzten Reparaturmaterials hinsichtlich des Reparaturbereichs verschieden sein.

Bevorzugt erfolgt das Erwärmen des Reparaturmaterials auf die Aushärtetemperatur in einem Ofen. Je nach Anwendungsfall kann das abgeformte Reparaturmaterial je nach Größe in Spezialöfen oder auch in einfachen Haushaltsbacköfen gehärtet werden.

Die Aushärtetemperatur für das Reparaturmaterial beträgt dabei in Abhängigkeit des eingesetzten Reparaturmaterials größer oder gleich 100 Grad Celsius.

Bevorzugt wird eine Trennfolie zwischen dem Reparaturbereich und dem Reparaturmaterial während des Abformens angeordnet, so dass das abgeformte und nach Temperaturabsenkung wieder verfestigte Reparaturmaterial in der entsprechenden Form ohne Probleme vom Reparaturbereich des Formteils abnehmbar und dann in den Ofen zur Aushärtung überführbar ist.

Vorteilhaft erfolgt das Abformen des Reparaturbereiches durch Andrücken des Reparaturmaterials mittels des wärmeerzeugenden Elements, beispielsweise in Form eines Bügeleisens. Dabei kann der Eintrag der Wärme und die mechanische Verformung des durch Wärme verformbaren Reparaturmaterials in einem Arbeitsgang erfolgen.

Bevorzugt ist das schichtförmige Reparaturmaterial selbst als Faserverbundkunststoff ausgebildet.

Die Konzeption der Erfindung beruht somit darauf, dass der Reparaturprozess unter Einsatz eines schichtförmigen Kunststoffreparaturmaterials mit Verstärkungsfasern, insbesondere aus Glas- oder Kunststofffasern, erfolgt. Das Reparaturmaterial besitzt spezielle Eigenschaften. Bei Lagertemperatur ist das Reparaturmaterial starr und fest und bei Temperaturen oberhalb der Lagertemperatur, der Verformungstemperatur, wird es reversibel verformbar und zähflüssig bis klebrig. In diesem Zustand wird der Reparaturbereich des Formteiles abgeformt und anschließend kühlt das Reparaturmaterial wieder aus und wird dabei fest, wobei es seine Form beibehält. Dieser Effekt entsteht durch ein Vorvernetzen der Polymerstrukturen des Reparaturmaterials. Bei einer erneuten Erhöhung der Temperatur auf die Aushärtetemperatur härtet das Reparaturmaterial dann irreversibel aus und kann nachfolgend mit dem Formteil im Reparaturbereich verbunden, insbesondere verklebt, werden. Die getrennten Phasen der Abformung der Kontur des Formteils und der Aushärtung unter optimalen Bedingungen sind kennzeichnend für die Konzeption und die sich daraus ergebenden Vorteile der Erfindung.

Das erfindungsgemäße Verfahren weist eine ganze Reihe von Vorteilen auf. Durch die Trennung von Abformung und Aushärtung kann der Aushärteprozess ausgelagert werden, wodurch am Ort der Reparatur keine Prozesstechnik für diesen Verfahrensschritt vorgehalten werden muss. Damit ist ein Großteil des Reparaturprozesses unter Werkstattbedingungen realisierbar, woraus verbesserte Arbeits- und Umgebungsbedingungen resultieren.

Weiterhin ist eine hohe Laminatqualität und damit eine hohe Festigkeit durch den kontrollierten Prozess bei konstanten und optimalen Reparaturbedingungen erreichbar.

Die Unabhängigkeit von Umweltbedingungen ist ein weiterer Vorteil, da die Reparatur bei beinahe jedem Wetter möglich ist, da die Aushärtung im Ofen erfolgt. Das einfache Prozesshandling vermindert außerdem die Fehleranfälligkeit des Reparaturprozesses insgesamt.
Zusammengefasst ist nur ein geringer Aufwand an Prozesstechnik erforderlich und die hohe Umformbarkeit des zähflüssigen Reparaturmaterials bei der Verformungstemperatur erlaubt die Abbildung und Abformung komplizierter dreidimensionaler Geometrien zur Erzeugung eines Reparaturrohlings, wodurch auch komplizierte Reparaturstellen bearbeitet werden können.
Durch die nach dem Verfahren ausführbaren hochwertigen Reparaturen können Neuanschaffungen von Formteilen vermieden werden, was zu Kosteneinsparungen führt.
Auch die unaufwändige Prozesstechnik spart Investitionskosten im Vergleich zu Verfahren mit spezieller Prozesstechnik, wie speziellen und teuren UV-Lampen. Das einfache Prozesshandling spart darüber hinaus Personalkosten und der Aushärteprozess des verwendeten Materials ist unter idealen Bedingungen im Ofen sehr schnell, wodurch sich insgesamt geringere Personalkosten, geringere Energiekosten sowie eine geringere Auslastung der Prozesstechnik ergeben.

Auch ökologisch weist das Verfahren eine Reihe von Vorteilen auf, da beispielsweise im Vergleich zum Nasslaminieren keine Harzreste entstehen, welche eine Umweltbelastung darstellen.

Ein weiterer Vorteil ist der geringere Energieaufwand des Reparaturverfahrens, der durch eine kurze Aushärtedauer und optimal isolierte Heizbehälter und Öfen erzielt wird.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Rotorblatt mit geschädigtem Bereich,
- Fig. 2:: Rotorblatt mit Reparaturbereich,
- Fig. 3:: Reparaturmaterial als Reparatursheet,
- Fig. 4:: Rotorblatt mit vorbereitetem Reparaturbereich,
- Fig. 5:: Ofen für die Aushärtung und
- Fig. 6:: Rotorblatt mit Reparaturmaterial beim Verkleben.

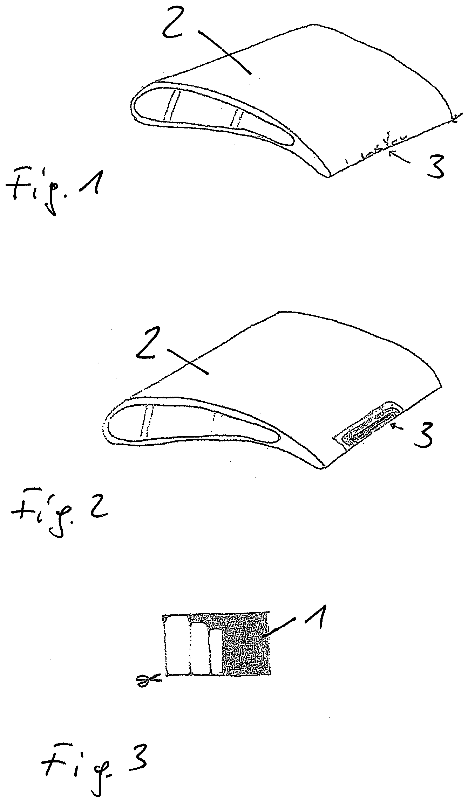

In Figur 1 ist prinziphaft ein Teil eines Rotorblattes einer Windkraftanlage im Querschnitt als Formteil 2 dargestellt. Das Rotorblatt hat auf der spitz zulaufenden Seite, der Trailing Edge, einen beschädigten Bereich, der als Reparaturbereich 3 bezeichnet ist. Der Reparaturbereich 3 befindet sich im dargestellten Ausführungsbeispiel an dem stark gekrümmten Bereich des Formteiles 2, was eine Reparatur mit herkömmlichen Methoden aufwändig und schwierig gestaltet.

Zunächst erfolgt nun in Figur 2 prinziphaft dargestellt eine Vorbearbeitung des Reparaturbereichs 3 durch gezieltes Freilegen der beschädigten Faserbereiche mittels Schleifen, auch Schäften genannt.

In Figur 3 ist nun Reparaturmaterial 1 als Reparatursheet dargestellt, welches selbst einen schichtartigen Aufbau besitzt und im Lagerzustand zwar fest, aber beispielsweise mit einer Schere schneidbar ist. Das Reparaturmaterial 1 wird nun entsprechend der Maße des Reparaturbereiches 3 zugeschnitten, wobei für stärker geschädigte Reparaturbereiche 3 auch mehrere Lagen von Reparaturmaterial 1 vorbereitet werden können.

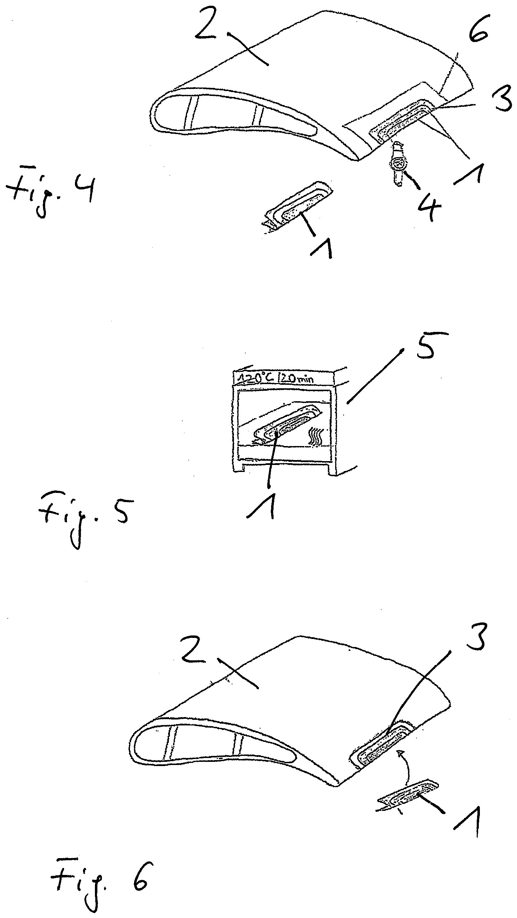

In Figur 4 ist dargestellt, wie das Reparaturmaterial 1 in mehreren verschiedenen Lagen auf dem Reparaturbereich 3 des Formteils 2 angeordnet ist, wobei zwischen der untersten Lage des Reparaturmaterials 1 und der Oberfläche des Reparaturbereichs 3 des Formteils 2 eine Trennfolie 6 angeordnet ist, welche nach der Abformung des Materials eine vereinfachte Trennung von vorgeformtem Reparaturmaterial 1 und Formteil 2 ermöglicht.
Das Reparaturmaterial 1 wird nun auf den Reparaturbereich 3 in entsprechender Anzahl der Lagen aufgebracht und mit einem Heizelement 4 von der Lager- bzw. Umgebungstemperatur auf die Verformungstemperatur erwärmt. Dabei wird das Reparaturmaterial 1 plastisch verformbar und passt sich der in diesem Falle stark gekrümmten Oberfläche beziehungsweise Kante oder Ecke des Formteils 2 an und ist um diese herum klappbar.
Das Verformen des Reparaturmaterials 1 und das Abformen der Kontur des Formteils 2 an der betreffenden Stelle, dem Reparaturbereich 3, erfolgt beispielsweise durch Andrücken des bei entsprechender Temperatur verformbaren Reparaturmaterials 1 an den Reparaturbereich 3. Wird das Heizelement 4 entfernt oder ausgeschaltet, kühlt sich das Reparaturmaterial 1 ab und wird reversibel wieder fest. Durch die Vorvernetzung des Faserverbundkunststoffes des Reparaturmaterials1 entsteht ein sogenanntes Formengedächtnis des Reparaturmaterials 1 und die Form erstarrt auf der Kontur des Reparaturbereichs 3 des Formteils 2. Nachdem das Reparaturmaterial 1 wieder fest und starr geworden ist, kann es von dem Formteil 2 und der Trennfolie 6 unter Beibehaltung der Form abgenommen werden. Das Reparaturmaterial 1 wird anschließend in einem Ofen 5, dargestellt in Figur 5, unter definierten Bedingungen in der abgeformten Form ausgehärtet. Die räumliche Trennung von Abformung des Reparaturmaterials 1 und Aushärtung beinhaltet einige Vorteile.
Besonders hervorzuheben ist, dass das Aushärten in einem Ofen 5 mit einer optimalen Temperatur für das Reparaturmaterial 1 erfolgen kann, wobei eine gleichmäßige Aushärtung des Materials durch die homogenen Temperaturbedingungen in einem Ofen erreicht werden kann. Im Unterschied zu konventionellen Verfahren, wo eine Aushärtung mit ultraviolettem Licht, UV, oder Wärme gegebenenfalls vor Ort am Formteil erfolgt, ist eine Einhaltung der erforderlichen Temperaturen über die entsprechenden Zeiten örtlich häufig nicht in allen Bereichen der Reparaturmaterialien möglich. Dies gilt erfahrungsgemäß ganz besonders dann, wenn geometrisch schwierige Oberflächenkonturen zu behandeln sind.
Nach dem Aushärten des Rohlings aus Reparaturmaterial 1 im Ofen 5, auch Konsolidierung genannt, wird dieser gemäß Figur 6 auf den Reparaturbereich 3 des Formteils 2 aufgebracht und mit diesem verklebt. Die Weiterverarbeitung der Oberfläche des nunmehr vom Reparaturmaterial 1 abgedeckten Reparaturbereichs 3 kann unmittelbar nach dem Verkleben erfolgen, da die Aushärtung des Reparaturmaterials 1 selbst bereits im Ofen 5 vollständig stattgefunden hat und das Material somit in seiner Oberfläche sofort bearbeitbar ist.
Der Reparaturbereich 3 mit dem Reparaturmaterial 1 kann nun geschliffen und beschichtet werden, je nach den Anforderungen, die an das Formteil 2 gestellt werden.

Das Anwendungsgebiet der Erfindung liegt insbesondere bei der Windkraftanlagenreparatur, der Automobilindustrie, der Sport- und Freizeitindustrie, dem Rohrleitungsbau und der Gebäudetechnik.

Bei Rotorblättern von Windkraftanlagen entstehen die meisten Schäden an der Trailing- and Leading Edge des Windblattes, deren Reparatur sich wegen der dreidimensionalen Kontur mit konventionellen Methoden schwierig gestaltet. Ausgeformte Karosserieteile oder Verkleidungsteile in der Automobilindustrie sind in gleicher Weise vorteilhaft mit dem erfindungsgemäßen Verfahren reparabel wie Sportgeräte, insbesondere Surfboards, Snowboards oder Boote. Im Rohrleitungsbau liegt das Einsatzgebiet vor allem bei Winkelstücken und T-Stücken und in der Gebäudetechnik bei Kanten und Ecken von Betonstrukturen.

### Bezugszeichenliste

- 1: Reparaturmaterial
- 2: Formteil
- 3: Reparaturbereich
- 4: Heizelement
- 5: Ofen
- 6: Trennfolie

## Patentansprüche

1. Verfahren zur Reparatur von Formteilen (2) unter Einsatz eines schichtförmigen Reparaturmaterials (1), welches bei einer Lagertemperatur fest, bei einer Verformungstemperatur reversibel plastisch verformbar und bei einer Aushärtetemperatur irreversibel formstabil aushärtbar ist, aufweisend die Verfahrensschritte:
a) Erwärmen des Reparaturmaterials (1) von der Lagertemperatur auf die Verformungstemperatur,
b) Aufbringen des plastisch verformbaren Reparaturmaterials (1) auf einen Reparaturbereich (3) des Formteils (2),
c) Abformen der Oberflächenkontur des Reparaturbereiches (3) des Formteils (2),
d) Aktives oder passives Kühlen des Reparaturmaterials (1) unter die Verformungstemperatur,
e) Entfernen des an die Kontur des Reparaturbereiches (3) angeformten festen Reparaturmaterials (1) vom Reparaturbereich (3) des Formteils (2),
f) Erwärmen des Reparaturmaterials (1) auf die Aushärtetemperatur unter formstabiler Aushärtung des Reparaturmaterials (1) und
g) Verkleben des ausgehärteten Reparaturmaterials (1) mit dem Reparaturbereich (3) des Formteils (2).

2. Verfahren nach Anspruch 1, **dadurch gekennzeichnet, dass** das Erwärmen und das Aufbringen des Reparaturmaterials (1) und das Abformen des Reparaturbereiches (3) in einem Verfahrensschritt erfolgen.

3. Verfahren nach Anspruch 1 oder 2, **dadurch gekennzeichnet, dass** mehrere Reparaturmaterialien (1) übereinander auf dem Reparaturbereich (3) aufgebracht und miteinander verbunden werden.

4. Verfahren nach einem der Ansprüche 1 bis 3, **dadurch gekennzeichnet, dass** das Erwärmen des Reparaturmaterials (1) von der Lagertemperatur auf die Verformungstemperatur mittels einem Heizelement (4), wie einer Heißluftpistole, einem Bügeleisen, einer Heizmatte, einer Heizfolie, einem heißluftgefülltem Behälter, einem Infrarotheizelement, einem Induktionsheizer oder einem Wärmekissen als Latentwärmespeicher oder mit Kombinationen vorgenannter Heizelemente (4), erfolgt.

5. Verfahren nach einem der Ansprüche 1 bis 4, **dadurch gekennzeichnet, dass** die Verformungstemperatur für das Reparaturmaterial (1) 80 Grad Celsius beträgt.

6. Verfahren nach einem der Ansprüche 1 bis 5, **dadurch gekennzeichnet, dass** das Erwärmen des Reparaturmaterials (1) auf die Aushärtetemperatur in einem Ofen (5) erfolgt.

7. Verfahren nach einem der Ansprüche 1 bis 6, **dadurch gekennzeichnet, dass** die Aushärtetemperatur für das Reparaturmaterial (1) größer oder gleich 100 Grad Celsius beträgt.

8. Verfahren nach einem der Ansprüche 1 bis 7, **dadurch gekennzeichnet, dass** eine Trennfolie (6) zwischen dem Reparaturbereich (3) und dem Reparaturmaterial (1) während des Abformens angeordnet ist.

9. Verfahren nach einem der Ansprüche 1 bis 8, **dadurch gekennzeichnet, dass** das Abformen des Reparaturbereiches (3) durch Andrücken des Reparaturmaterials (1) mittels des Wärme erzeugenden Elements erfolgt.

10. Verfahren nach einem der Ansprüche 1 bis 9, **dadurch gekennzeichnet, dass** das schichtförmige Reparaturmaterial (1) als Faserverbundkunststoff ausgebildet ist.

## Claims

1. A process for the repair of molded parts (2) using a layered repair material (1), which is solid at a storage temperature, reversibly plastically deformable at a deformation temperature, and irreversibly dimensionally stably curable at a curing temperature, comprising the process steps of:
a) warming the repair material (1) from the storage temperature to the deformation temperature,
b) applying the plastically deformable repair material (1) to a repair area (3) of the molded part (2),
c) casting the surface contour of the repair area (3) of the molded part (2),
d) actively or passively cooling the repair material (1) below the deformation temperature,
e) removing the solid repair material (1) molded onto the contour of the repair area (3) from the repair area (3) of the molded part (2),
f) warming the repair material (1) to the curing temperature by dimensionally stably curing the repair material (1), and
g) bonding the cured repair material (1) with the repair area (3) of the molded part (2).

2. The process according to claim 1, **characterized in that** the warming and the applying of the repair material (1) and the casting of the repair area (3) are done in one process step.

3. The process according to claim 1 or 2, **characterized in that** a plurality of repair materials (1) are applied one on top of the other on the repair area (3) and are interconnected.

4. The process according to any one of claims 1 bis 3, **characterized in that** the warming of the repair material (1) from the storage temperature to the deformation temperature is done by means of a heating element (4) such as a heat gun, an iron, a heating mat, a heating foil, a container filled with hot air, an infrared heating element, an induction heater or a heating pad as latent heat storage, or with combinations of the aforementioned heating elements (4).

5. The process according to any one of the claims 1 to 4, **characterized in that** the deformation temperature for the repair material (1) is 80 degrees Celsius.

6. The process according to any one of the claims 1 to 5, **characterized in that** the warming of the repair material (1) to the curing temperature is done in an oven (5).

7. The process according to any one of the claims 1 bis 6, **characterized in that** the curing temperature for the repair material (1) is higher than or equal to 100 degrees Celsius.

8. The process according to any one of the claims 1 to 7, **characterized in that** a separating foil (6) is arranged between the repair area (3) and the repair material (1) during casting.

9. The process according to any one of the claims 1 to 8, **characterized in that** the casting of the repair area (3) is done by pressing on the repair material (1) by means of the heat generating element.

10. The process according to any one of the claims 1 to 9, **characterized in that** the layered repair material (1) is formed as a fiber-reinforced plastic.

## Revendications

1. Procédé de réparation de pièces moulées (2) en utilisant un matériau de réparation (1) en forme de couche qui est solide à une température de stockage, peut être déformé plastiquement de manière réversible à une température de déformation et peut être durci de manière indéformable et irréversible à une température de durcissement, présentant les étapes de procédé :
a) réchauffement du matériau de réparation (1) de la température de stockage à la température de déformation,
b) application du matériau de réparation (1) pouvant être déformé plastiquement sur une région de réparation (3) de la pièce moulée (2),
c) moulage du contour superficiel de la région de réparation (3) de la pièce moulée (2),
d) refroidissement actif ou passif du matériau de réparation (1) en dessous de la température de déformation,
e) retrait du matériau de réparation solide (1) modelé au contour de la région de réparation (3) de la région de réparation (3) de la pièce moulée (2),
f) réchauffement du matériau de réparation (1) à la température de durcissement en durcissant de manière indéformable le matériau de réparation (1) et
g) collage du matériau de réparation durci (1) avec la région de réparation (3) de la pièce moulée (2).

2. Procédé selon la revendication 1, **caractérisé en ce que** le réchauffement et l'application du matériau de réparation (1) et le moulage de la région de réparation (3) s'effectuent en une étape de procédé.

3. Procédé selon la revendication 1 ou 2, **caractérisé en ce que** plusieurs matériaux de réparation (1) sont appliqués l'un au-dessus de l'autre sur la région de réparation (3) et connectés l'un à l'autre.

4. Procédé selon une des revendications 1 à 3, **caractérisé en ce que** le réchauffement du matériau de réparation (1) de la température de stockage à la température de déformation s'effectue au moyen d'un élément chauffant (4), comme un pistolet à air chaud, un fer à repasser, un tapis chauffant, un film chauffant, un récipient rempli d'air chaud, un élément chauffant infrarouge, un filament à induction ou un coussin chauffant en tant qu'accumulateur de chaleur latente ou avec des combinaisons d'éléments chauffants précités (4).

5. Procédé selon une des revendications 1 à 4, **caractérisé en ce que** la température de déformation pour le matériau de réparation (1) est de 80 degrés Celsius.

6. Procédé selon une des revendications 1 à 5, **caractérisé en ce que** le réchauffement du matériau de réparation (1) à la température de durcissement s'effectue dans un four (5).

7. Procédé selon une des revendications 1 à 6, **caractérisé en ce que** la température de durcissement pour le matériau de réparation (1) est supérieure ou égale à 100 degrés Celsius.

8. Procédé selon une des revendications 1 à 7, **caractérisé en ce qu'**un film de séparation (6) est disposé entre la région de réparation (3) et le matériau de réparation (1) pendant le moulage.

9. Procédé selon une des revendications 1 à 8, **caractérisé en ce que** le moulage de la région de réparation (3) s'effectue par appui du matériau de réparation (1) au moyen de l'élément générant de la chaleur.

10. Procédé selon une des revendications 1 à 9, **caractérisé en ce que** le matériau de réparation (1) en forme de couche est réalisé en tant que plastique composite fibreux.
